Europäisches Patentamt

European Patent Office

Office européen des brevets

(11) Publication number: **0 052 852**
**B1**

(12) EUROPEAN PATENT SPECIFICATION

(45) Date of publication of patent specification: **10.04.85**

(51) Int. Cl.⁴: **H 02 K 15/06**

(21) Application number: **81109737.7**

(22) Date of filing: **17.11.81**

(54) Coil insertion apparatus.

(30) Priority: **21.11.80 JP 164973/80**

(43) Date of publication of application:
**02.06.82 Bulletin 82/22**

(45) Publication of the grant of the patent:
**10.04.85 Bulletin 85/15**

(84) Designated Contracting States:
**DE GB**

(56) References cited:
**FR-A-2 118 775**
**GB-A-2 033 792**
**US-A-3 811 169**
**US-A-4 047 293**

(73) Proprietor: **Matsushita Electric Industrial Co., Ltd.**
**1006, Oaza Kadoma**
**Kadoma-shi Osaka-fu, 571 (JP)**

(72) Inventor: **Kubota, Tadashi**
**5-4, Myokenzaka 4-chome**
**Katano-shi Osaka-fu 576 (JP)**
Inventor: **Hamane, Tokuhito**
**16-19, Nagao Tanimachi 3-chome**
**Hirakata-shi Osaka-fu 573-01 (JP)**
Inventor: **Tasai, Masaaki**
**16-1, Miyamae-cho**
**Kadoma-shi Osaka-fu (JP)**

(74) Representative: **Eisenführ & Speiser**
**Martinistrasse 24**
**D-2800 Bremen 1 (DE)**

Courier Press, Leamington Spa, England.

## Description

The present invention is relating to a coil insertion apparatus which comprises a plurality of blade members arranged in an annular configuration at predetermined intervals for guiding a coil into slots formed in a core of a stator for a rotary electrical machine, and a coil pusher adapted to vertically reciprocate in the axial direction of said blade members for inserting the coil into said slots under pressure by utilizing said blades as a guide, the plurality of said blade members being divided into a plurality of blade groups which are respectively held by separate blade holders.

Conventionally, there have been proposed a coil insertion apparatus generally referred to as the fixed blade type and having all the blades fixed to a blade holder. In coil insertion apparatuses of this type the coil tends to be damaged during insertion thereof into a stator core due to a large frictional resistance between the blades and the coil, and moreover, diameters of wires for coils applicable to the apparatus are limited to a large extent.

US—A—4 047 293 provides a coil insertion device with a plurality of blades moving relative to one another. Alternate ones of the blades oscillate 180° out of phase with one another. This enlarges the range of diameters of wires for coils applicable to the apparatus.

Another coil insertion apparatus commonly referred to as the movable blade type and having all the blades or part of the blades secured to a coil pusher is advantageous in that the coil insertion resistance may be reduced, but there have been such inconveniences that, since the coil is axially pushed up more than necessarily due to restriction to the movement of the coil in a direction at right angles with respect to the inserting direction by the movable blades rising together with the coil pusher during insertion of the coil, it is necessary to preliminarily arrange the length of the coil ends to be longer by that extent. Accordingly, there has been a restriction that apparatuses of this type can not be applied to stators having windings whose circumferential length is reduced as far as possible to lower both coil ends of the stators for compact size of the electrical machines, since abnormal forces are exerted on the movable blades and the coil to be dealt with.

A coil insertion apparatus according to FR—A—2 118 775 comprises two blade groups where one of the blade groups is attached to the coil pusher and the other one is attached to a blade holder. Coil pusher and blade holder can be axially displaced simultaneously. The blade holder with its blades is stopped in predetermined position by a locking mechanism. This reduces the insertion resistance but there occur inconveniences similar to those inherent to the movable blade type. The apparatus is not applicable to all types of coils and the length of the blades has to be altered when coils of different size are to be inserted.

In the case where, for example, a coil having a small insertion resistance and another coil having a large insertion resistance are required to be inserted into the same stator core as desired, it has been necessary to prepare corresponding two kinds of coil insertion apparatuses of the fixed blade type and of the movable blade type, since change-over from the fixed blade type to the movable blade type or vice versa cannot readily be effected in general.

When the thickness of the stator core is to be altered, the range of the blades has to be rearranged accordingly. This procedure requires loosening of several bolts, replacing or shifting of the blades and subsequent tightening of the bolts again. Therefore, there has also been such disadvantage that a considerable period of time is required for such change-over in the production of various stators having different thicknesses. In an apparatus according to FR—A—2 118 775 this procedure is unnecessary only if the type of coil remains unchanged.

Accordingly, the object of the present invention is to provide a coil insertion apparatus suitable for respective winding specifications of stators so as to make it possible to efficiently insert coils having low coil ends and short circumferential length into stator cores, which may be simply adjusted to specification alterations, which should be simple in construction, stable in function at high reliability, and which should be readily manufactured at low cost.

This object is accomplished in that said blade members are movable in the axial direction independently of each other, said plurality of said blade holders and said coil pusher being respectively provided with reciprocation driving sections which are independent of each other, the tip of said blade members being located at the end of the insertion movement in a position below the upper end of the coil pusher.

By the arrangement according to the present invention as described above, an improved coil insertion apparatus has been advantageously presented, with substantial elimination of disadvantages inherent in conventional arrangements of this kind.

The advantages of the present invention will become apparent from the following description taken in conjunction with reference to the accompanying drawings, in which:

Figs. 1 to 3 are fragmentary sectional views showing arrangements in the conventional coil insertion apparatuses (already referred to),

Fig. 4 is a schematic longitudinal side sectional view showing the construction of an improved coil insertion apparatus according to one preferred embodiment of the present invention, under the state where a coil is mounted thereon,

Fig. 5 is a top plan view of the coil insertion apparatus of Fig. 4,

Figs. 6 to 9 are views similar to Fig. 4, which particularly show sequence of functionings of a coil pusher and blades of the coil insertion apparatus of the present invention,

Fig. 10 is a timing chart explaining a first and a second coil insertion methods according to the present invention,

Fig. 11 is a longitudinal sectional view of blade portions of a coil insertion apparatus according to another embodiment of the present invention,

Fig. 12 is a side elevational view of a driving section of the coil insertion apparatus of Fig. 11, and

Fig. 13 is a top plan view of the coil insertion apparatus of Fig. 11.

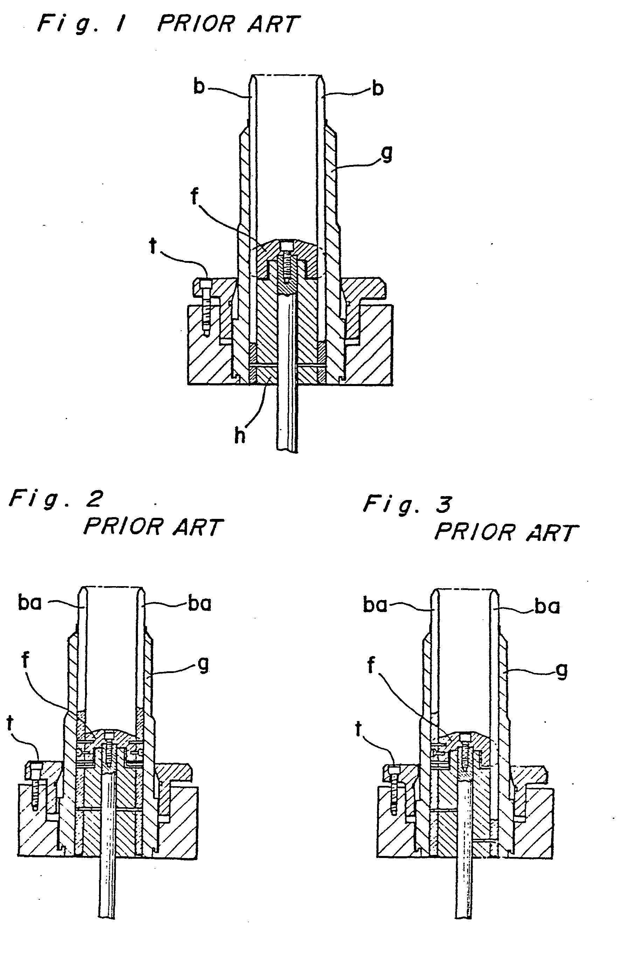

Fig. 1 shows a coil insertion apparatus of the fixed blade type, having all the blades b fixed to a blade holder h. Due to a large frictional resistance between the blades b and the coil (not shown) the latter tends to be damaged during insertion thereof into a stator core (not shown).

In Figs. 2 and 3 there are shown two coil insertion apparatuses of the movable blade type having all the blades or part of the blades (for example, blades ba) secured to a coil pusher f. The movable blades ba rise together with a coil pusher f during insertion of the coil.

In all of the known types in Figs. 1 to 3, when the thickness of the stator core is to be altered, the bolts t are to be loosened, the distance between the tips of the blades b and ba and the tip of a wedge guide g is set to a value in which a predetermined length is added to the stator thickness, with subsequent tightening of the bolts t again.

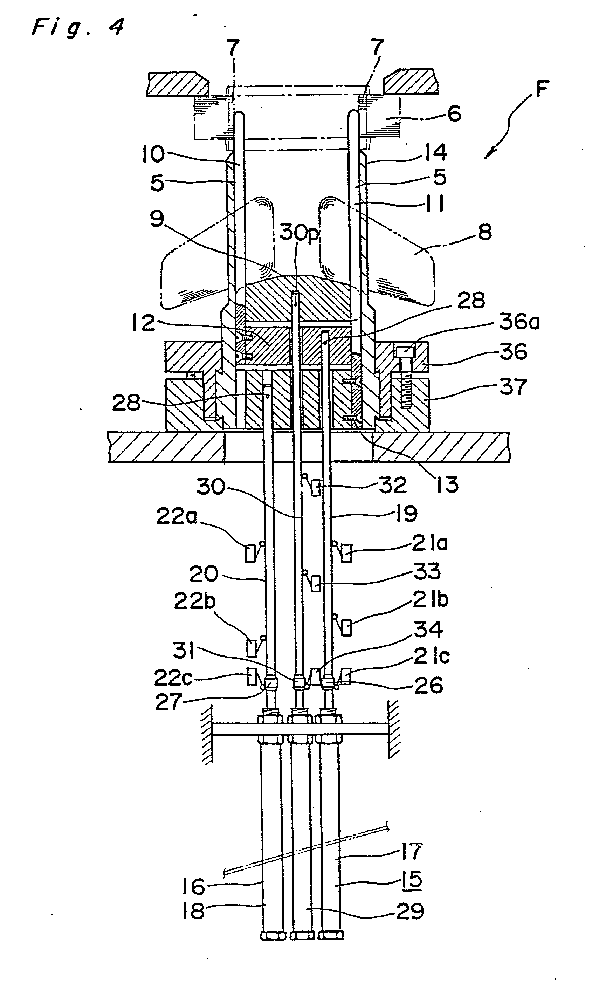

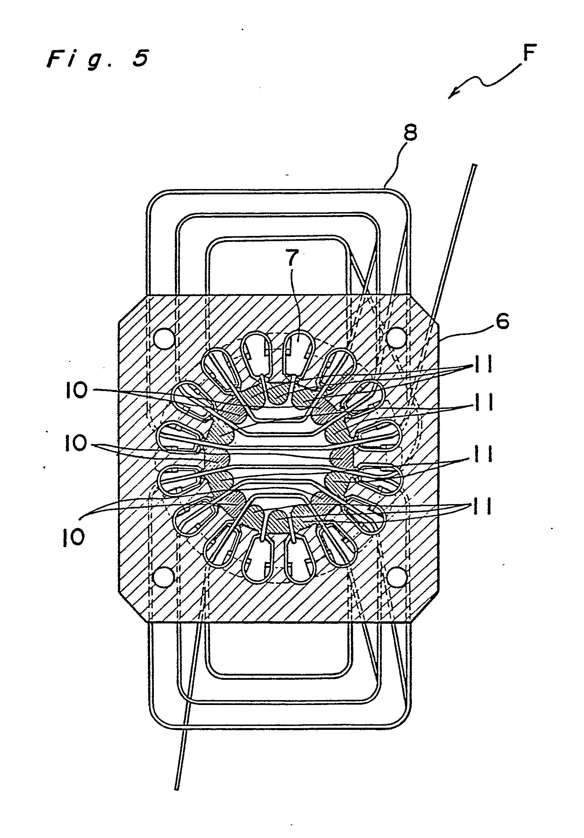

Referring now to Figs. 4 and 5, there is shown an improved coil insertion apparatus F according to one preferred embodiment of the present invention, which generally includes a plurality of blades 5 arranged in an annular configuration at predetermined intervals for guiding a coil 8 into slots 7 formed in an iron core 6 of a stator for an electrical rotary machine, and a coil pusher 9 adapted to reciprocate in the longitudinal direction of said blades 5 for inserting the coil 8 into the corresponding slots 7 while being guided by the blades 5. The plurality of blades 5 as described above are classified into two blade groups, i.e. a first blade group 10 and a second blade group 11, each secured to a corresponding first blade holder 12 and a second blade holder 13. Meanwhile, the blades 5 for the respective blade groups 10 and 11 are guided by a wedge guide 14 for movement in the axial direction in one unit with each of the blade holders 12 and 13.

It is to be noted here that the blades 5 for the above first and second blade groups 10 and 11 are further classified into groups at every other blade, with the coil 8 to be inserted held therebetween (Fig. 5).

The coil insertion apparatus of Fig. 4 further includes a first and second reciprocation driving sections 15 and 16 for independently subjecting the first and second blade holders 12 and 13 to vertical reciprocating movements respectively. The reciprocation driving sections 15 and 16 as described above are respectively constituted by hydraulic cylinders 17 and 18, corresponding rods 19 and 20, limit switches 21a, 21b and 21c, and 22a, 22b and 22c, and contact portions 26 and 27 provided on the rods 19 and 20 so as to be brought into contact with said limit switches for selective actuation thereof, while the upper ends of the rods 19 and 20 are respectively fixed to the first and second blade holders 12 and 13 by pins 28. For subjecting the coil pusher 9 to the vertical reciprocating movement, there is also provided a reciprocation driving hydraulic cylinder 29, while the upper end of a rod 30 of the hydraulic cylinder 29 which extends upwardly between the rods 19 and 20 in a parallel relation thereto is secured to the coil pusher 9 by a pin 30p. The rod 30 is provided with a contact portion 31 which is brought into contact with limit switches 32, 33 and 34 disposed along the rod 30 for selective actuation of said limit switches 32, 33 and 34. The wedge guide 14 is secured to an insertion jig body 37 through a fixing member 36 fixed to said jig body 37, for example, by screws 36a and the like.

Subsequently, functions for inserting the coil 8 into the slots 7 of the iron core 6 will be described.

The coil insertion apparatus F of Fig. 4 as described in the foregoing is capable of adopting optimum coil inserting functions corresponding to the number of turns, wire diameter, etc. of the stator coil to be inserted, each of which functions will be explained hereinbelow.

A first method of coil insertion according to the present invention relates to the inserting function suitable for such a coil that the diameter of the wire forming the coil is comparatively small and more than two turns of wires are to be inserted between the blades 5, and will subsequently be described with particular reference to Figs. 4 to 8.

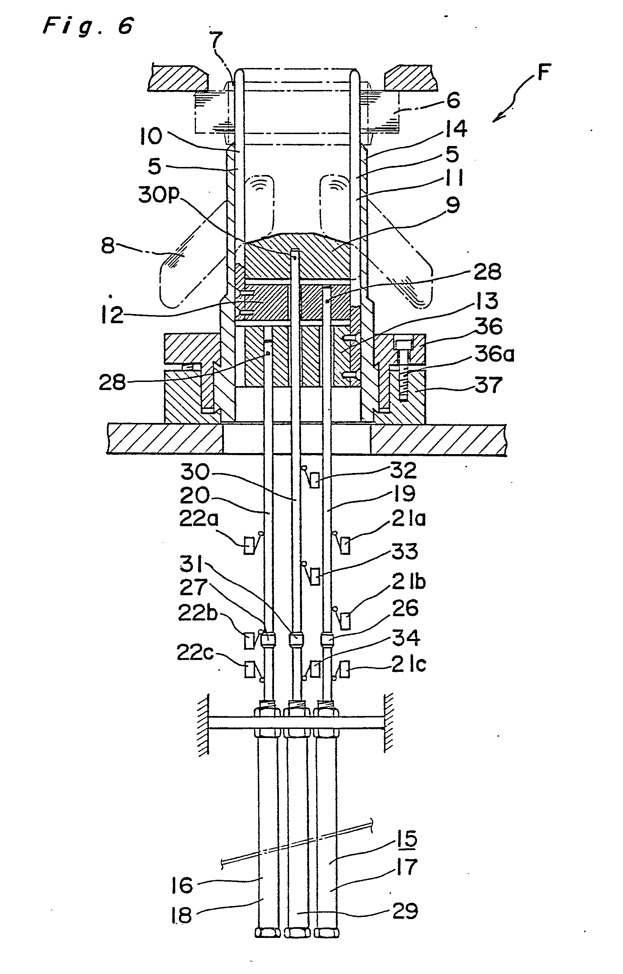

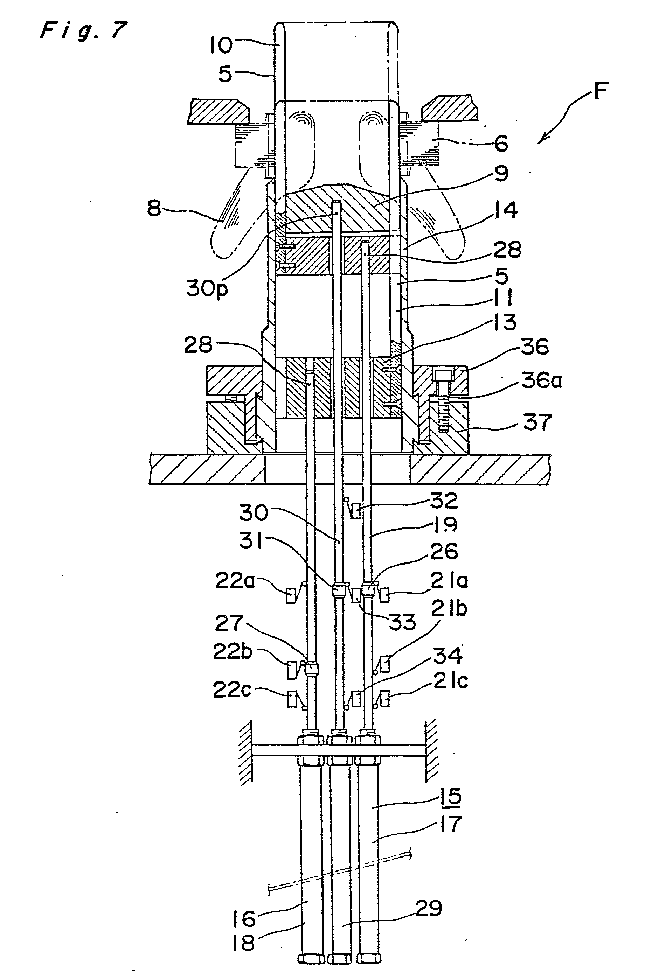

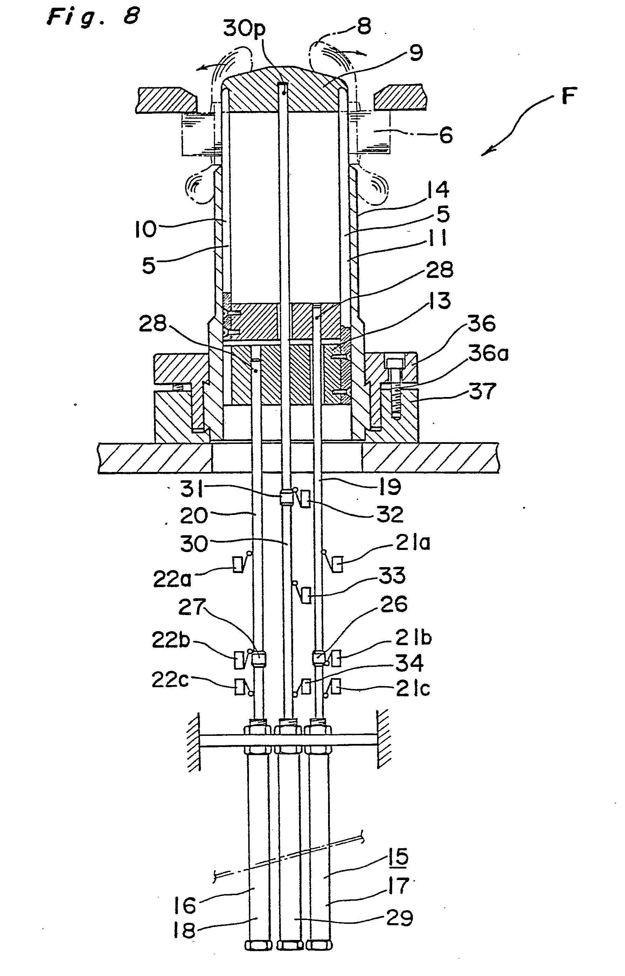

Firstly, in the coil insertion apparatus F under the state as shown in Fig. 4, by operating the reciprocation driving hydraulic cylinders 17, 18 and 29, respective rods 19, 20 and 30, first and second blade holders 12 and 13 and coil pusher 9, and first and second blade groups 10 and 11 are sequentially raised. As shown in Fig. 6, the contact portion 27 of the rod 20 is preliminarily adjusted to actuate the limit switch 22b in a position where the tip of the second blade group 11 projects out of the upper surface of the stator core 6 by a predetermined extent, and at this position, the rod 20 is stopped, while the second blade group 11 is also stopped, with the tip thereof extending upwardly from the upper surface of said stator core 6 by the predetermined extent. Meanwhile, the first blade group 10 and coil pusher 9 still continue to rise, and the coil 8 located between the blades 5 are depressed by the coil pusher 9 to effect the insertion of the coil 8 into the slots 7 of the iron core 6. In the first half stage where the insertion of a predetermined amount of the coil 8 is finished, the contact portion 26 provided on the rod 19 of the hydraulic cylinder 17 for raising the first blade group 10 actuates the microswitch 21a as shown in Fig. 7, and by the signal developed thereby, the first blade group 10 starts lowering. As shown in Fig. 8, the contact portion 26 of the rod 19 is preliminarily adjusted to actuate the limit switch 21b

in the course of its descent at a position where the tip of the first blade group 10 is located at the same height as the tip of the second blade group 11 so as to stop the rod 19 thereat.

Along with the descent and stopping of the first blade group 10, the coil pusher 9 continues to ascend, and the contact portion 31 of the rod 30 is preliminarily adjusted to actuate the limit switch 32 at a position where the upper surface of the coil pusher 9 extends out of the tip of the blades 5 to a certain extent so as to stop the coil pusher 9 at this position as in Fig. 8, and thus, the insertion of the coil 8 into the stator core 6 is completed.

Subsequently, the stator core 6 in which the coil 8 has been thus inserted is removed, and the first and second blade groups 10 and 11 and the coil pusher 9 are lowered to such positions that the contact portions 26, 27 and 31 of the rods 19, 20 and 30 respectively actuate the microswitches 21c, 22c and 34 to prepare for the subsequent coil inserting process.

By the coil inserting operations as described in the foregoing, since the blades 5 of the first blade group 10, which are counterpart of the blades 5 for guiding the coil 8 in association with the movement of the coil 8 by the coil pusher 9, are raised, there is no relative displacement between the first blade group 10 and the coil 8, without any possibility of damages to the coil 8 by the blades 5, and thus, favorable insertion of the coil 8 may be effected, while, at the latter half of the inserting function, since all the blades 5 come to be located in a position below the upper end of the coil pusher 9, the coil 8 can readily move in a direction at right angles (i.e. in a direction shown by the arrow in Fig. 8) with respect to the direction of insertion, and therefore, as compared with the conventional inserting methods, there is such advantage that the insertion can be readily effected even when the circumferential length of the coil is shortened.

Hereinbelow, the coil inserting functions according to a second method of the present invention, which is suitable for insertion of a coil having a comparatively large wire diameter and expected to provide a great insertion resistance during the insertion, will be explained.

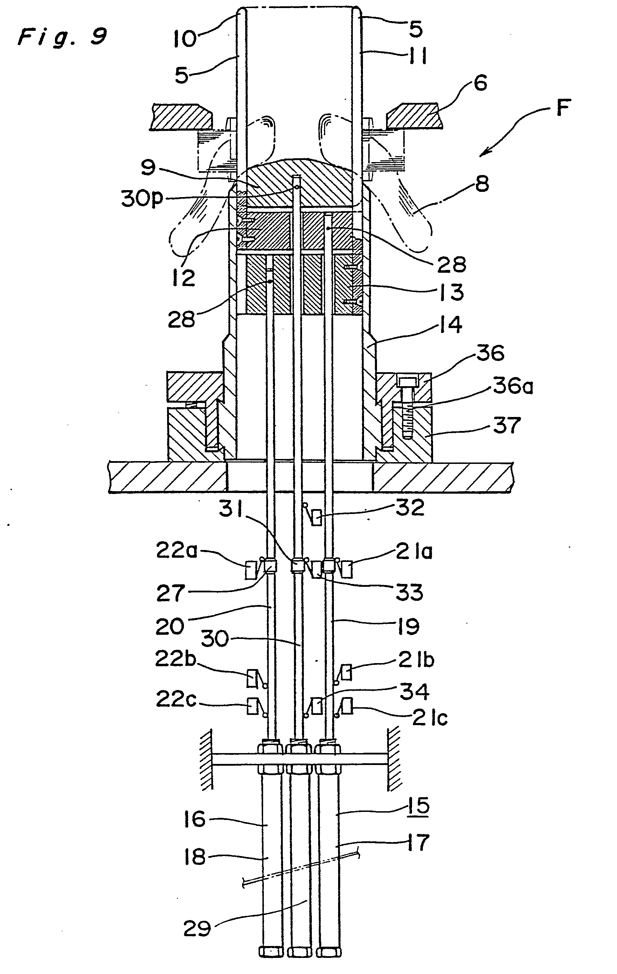

In the first place, the reciprocation driving hydraulic cylinders 17, 18 and 29 are operated to raise the respective rods 19, 20 and 30, first and second blade holders 12 and 13, and coil pusher 9. As shown in Fig. 9, up to a position where the inserting resistance becomes large, i.e. a position where the upper surface of the coil pusher 9 has risen to a certain extent, above the location approximately equal to the height of the under face of the stator core 6, all the blades 5 and the coil pusher 9 simultaneously ascend for effecting the insertion of the coil 8. The inserting function as described above continues up to a position at which the contact portion 31 of the rod 30 actuates the limit switch 33, and the first half stage of the inserting operation is finished at this time point. Thereafter, the rods 19 and 20 descend to lower the first and second blade groups 10 and 11, and as illustrated in Fig. 8, at a position where the upper ends of the blades 5 have extended out of the upper surface of the stator core 6 to a predetermined extent, the contact portions 26 and 27 of the rods 19 and 20 actuate the limit switches 21b and 22b, at which time point, the lowering of the rods 19 and 20 is suspended. Even when the first and second blade groups 10 and 11 are stopped or descending, the coil pusher 9 continues to rise for effecting the latter half of the inserting function, which is generally the same as the first method described earlier, and through this process, the inserting operation is completed.

In the second inserting functions as described in the foregoing, since all the blades 5 and coil pusher 9 are simultaneously moved in the same direction at the first half stage where the insertion resistance is the largest, there is no relative movement with respect to the coil 8, and therefore, the insertion resistance is advantageously reduced to a large extent.

In the foregoing embodiment, although the first and second blade groups 10 and 11 and the coil pusher 9 are arranged to be positioned by the contact portions 26, 27 and 31 provided on the rods 19, 20 and 30 and the group of the limit switches actuated by said contact portions, if known means capable of effecting continuous positioning such as linear scales, etc. to be used for the similar purpose, is employed, it becomes possible to effect more complicated control of the blades and coil pusher.

In any of the arrangements described so far, in the case where the thickness of the stator core into which the coil is to be inserted, is altered, it is only required to change the positions of the limit switches which determine the upper limit of the respective blades and coil pusher or to effect alteration of the upper limit position by the linear scale, etc., and thus, the apparatus can readily cope with the specification alterations, as compared with the troublesome work required for the alterations in the conventional apparatus.

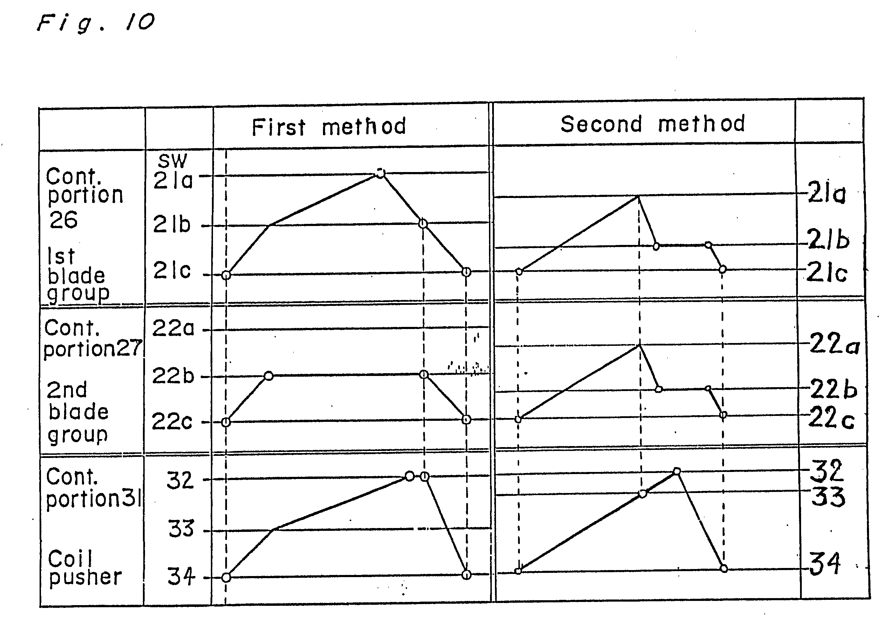

Referring to Fig. 10, there is shown a timing chart explaining the two coil insertion methods with the respective movements of the first and second blade groups and the coil pusher. Thus, there are six schedules in the timing chart of Fig. 10, each of them showing the movement of one of the beforementioned contact portions 26, 27, 31, and therefore indicating the movement of the rods 19, 20, 30. The movement of the contact portions is plotted relatively to the limit switches 21a, 21b, 21c; 22a, 22b, 22c; 32, 33, 34, respectively.

According to the first method, the contact portions 26, 27, 31 are raised to the limit switches 21b, 22b, 33 respectively. While the contact portion 27 (indicating the second blade group 11) is stopped at this position, the contact portions 26, 31 are raised to their highest extent. Afterwards they are lowered to their initial positions.

This method has for its object to improve the configuration after insertion of the coil by stopping the second group blades in the course during the coil insertion. The damage to the coil is reduced by reduction of the sliding distance with respect to the coil. This method is suitable for coils with comparatively small wire diameters and when more than two turns of wires are to be inserted between the blades.

According to the second method, the contact portions 26, 27, 31 are raised simultaneously until the contact portion 31 (attached to the coil pusher rod) meets the limit switch 33. Thereafter, contact portion 31 continues to rise, but contact portions 26 and 27 (indicating the two blade groups) descend till they actuate the limit switches 21b and 22b, respectively, at which time point, the lowering of the contact portions 26, 27 is suspended. Finally contact portion 31 meets the highest limit switch 32 and thus, the insertion of the coil into the stator core is completed. Subsequent the contact portions return to their initial positions. This method is preferred for coils which provide a great insertion resistance.

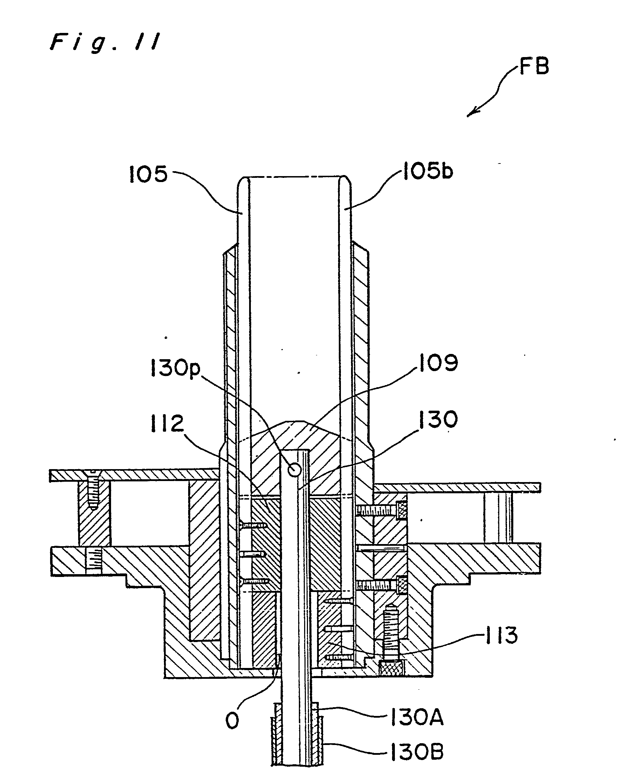

Referring to Figs. 11 to 13, there is shown a coil insertion apparatus FB according to another embodiment of the present invention.

In the embodiment of Figs. 11 to 13, the hydraulic cylinders described as employed in the arrangement of Figs. 4 to 9 are replaced by a linear motion mechanism employing threaded shafts and corresponding nuts as described hereinbelow.

The coil insertion apparatus FB of Figs. 11 to 13 generally includes a coil pusher 109 fixed to one end of a vertically movable shaft 130 by a pin 130p, a first blade holder 112 to which one group of blades 105 constituted by every other blade of all the blades are secured, and which is slidably fitted onto said shaft 130, and a second blade holder 113 to which another group of blades 105b excluding the above group of blades 105 are fixed and which is also slidably fitted onto the shaft 130 in a position below the first blade holder 112 for axial sliding movement with respect to said shaft 130, while the diameter of an opening O formed in the second blade holder 113 which is fitted onto the shaft 130 is arranged to be larger than that of the first blade holder 112.

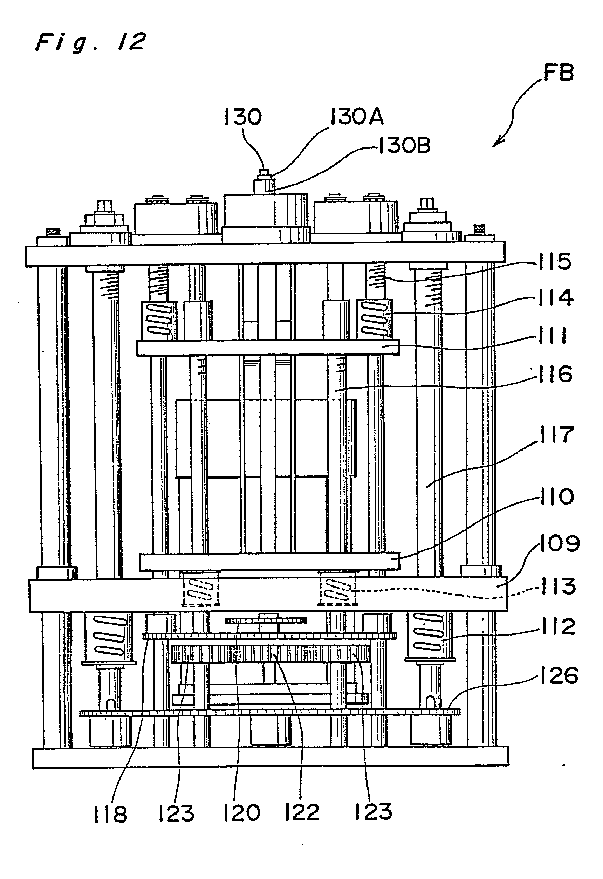

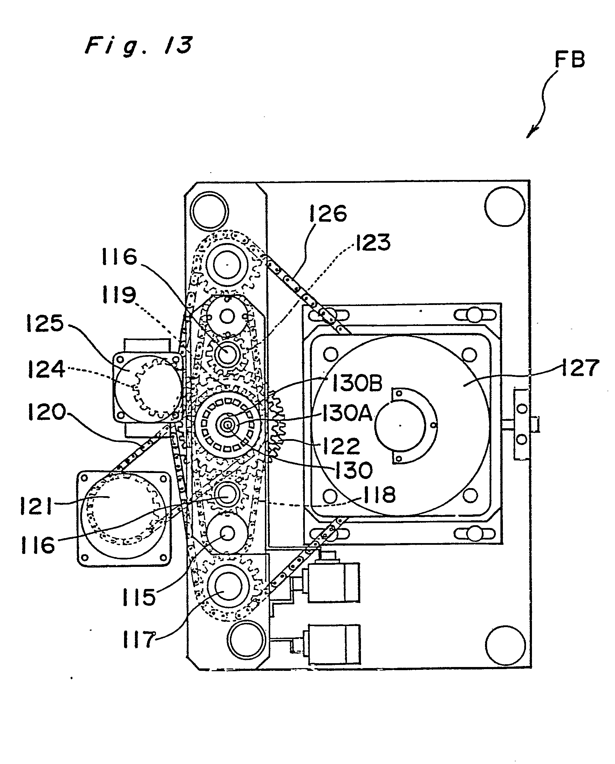

Around the lower portion of the shaft 130, there is concentrically and slidably fitted a first hollow shaft 130A for an independent sliding movement with respect to said shaft 130, and the first hollow shaft 130A is arranged to pass through the opening O of the second blade holder 113 so that it may ascend to contact the under face of the first blade holder 112 for raising said first blade holder 112. A second hollow shaft 130B is further concentrically and slidably fitted around the first hollow shaft 130A for sliding movement independently of said first hollow shaft 130A, and is arranged to contact, at its forward end, the under face of the second blade holder 113 so as to raise said holder 113. On the other hand, the shaft 130, first hollow shaft 130A and second hollow shaft 130B are respectively secured to a set of spaced plates 110 and 111 (Fig. 12), while nuts 112, 113 and 114 are respectively fixed to a plate 109 and the plates 110 and 111, so that said plates may be vertically moved through rotation of corresponding threaded shafts 115, 116 and 117 respectively engaged with said nuts 112 to 114. The threaded shaft 115 is coupled to a motor 121 through a chain 118, two sprocket wheels 119, and another chain 120, and the threaded shaft 116 is coupled to a motor 125 through gears 122, 123 and 124 in mesh with each other, while the threaded shaft 117 is coupled to another motor 127 through a chain 126 respectively for independent rotation (Fig. 13).

In the above embodiment of Figs. 11 to 13, since the motors are employed as driving sources, it is possible to set the speeds of the coil pusher and two blade groups to those most suitable for the coil insertion, while owing to the arrangement that the rotation is converted into the linear motion, the height of the apparatus may be extremely reduced as compared with the case of driving by the hydraulic cylinders.

As is clear from the foregoing description, according to the coil insertion apparatus of the present invention, since the movement of blades is arranged to be independent of the movement of the coil pusher, it is possible to insert a coil having low coil ends and a short circumferential length into the stator core with a small insertion resistance, and thus, highly efficient electrical machines of still more compact size having superior characteristics and performance may be produced, while alterations of stator thickness which have required very complicated procedures up to the present can advantageously be dealt with through simple positional changes of limit switches or revolution control of motors, etc.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

**Claims**

1. A coil insertion apparatus (F; FB) which comprises a plurality of blade members (5) arranged in an annular configuration at predetermined intervals for guiding a coil (8) into slots (7) formed in a core (6) of a stator for a rotary electrical machine, and a coil pusher (9; 109) adapted to vertically reciprocate in the axial direction of said blade members (5; 105) for inserting the coil (8) into said slots (7) under pressure by utilizing said blades (5; 105) as a guide, the plurality of said blade members (5; 105) being divided into a plurality of blade groups (10, 11; 105, 105b) which are respectively held by separate blade holders (12, 13, 112, 113), characterized in that said blade members are movable in the axial direction independently of each other, said plurality of said blade holders (12, 13; 112, 113) and said coil pusher (9; 109) being respectively provided with reciprocation driving sections (15, 16; 29) which are independent of each other, the tip of said blade members (5; 105) being located at the end of the insertion movement in a position below the upper end of the coil pusher (9; 109).

2. A coil insertion apparatus as claimed in claim 1, characterized in that said reciprocation driving sections (15, 16; 29) include three independent hydraulic cylinders (17, 18; 29) for driving.

3. A coil insertion apparatus as claimed in claim 2, characterized in that said three hydraulic cylinders (17, 18; 29) are arranged to drive said coil pusher (9) and two blade holders (12, 13) which are controlled for reciprocating positions thereof by contact portions (26, 27; 31) provided on rods (19, 20; 30) of said hydraulic cylinders (17, 18; 29) and corresponding limit switches (21a, 21b, 21c; 22a, 22b, 22c; 32, 33, 34) to be selectively turned on and off upon contact with said contact portions (26, 27; 31), said limit switches (21a, 21b, 21c; 22a, 22b, 22c; 32, 33, 34) being arranged to be variable in their fixing positions with respect to said contact portions (26, 27; 31).

4. A coil insertion apparatus as claimed in claim 1, characterized in that said reciprocation driving sections include three shafts (130, 130A, 130B) concentrically disposed and capable of independently pushing up said coil pusher (109) and two blade holders (112, 113), and three motors (121, 125, 127) which respectively subject said three shafts (130, 130A, 130B) to the vertical reciprocation independently of each other through threaded shafts (115, 116, 117) and corresponding nuts (112, 113, 114).

**Patentansprüche**

1. Spulen-Einsetzvorrichtung (F; IFB) mit mehreren, ringförmig in vorbestimmten Abständen angeordneten Lamellen (5) zum Einführen einer Spule (8) in Schlitze (7) im Rumpf (6) eines Stators einer rotierenden elektrischen Maschine, und mit einem vertikal in Axialrichtung der Lamellen (5; 105) hin- und herbeweglichen Spulentreiber (9; 109) zum Einsetzen der Spule (8) in die Schlitze (7) unter Druck bei Verwendung der Lamellen (5; 105) als Führung, wobei die Lamellen (5; 105) in mehrere Lamellengruppen (10, 11; 105, 105b) aufgeteilt sind, die durch getrennte Lamellenhalter (12, 13, 112, 113) gehalten werden, dadurch gekennzeichnet, daß die Lamellen unabhängig voneinander in der Axialrichtung beweglich sind, daß die Lamellenhalter (12, 13; 112, 113) und der Spulentreiber (9; 109) jeweils mit Antriebsabschnitten (15, 16; 29) für eine Hin- und Herbewegung versehen sind, die voneinander unabhängig sind, und daß die Spitze der Lamellen (5; 105) am Ende der Einsetzbewegung in einer Stellung unterhalb des oberen Endes des Spulentreibers (9; 109) angeordnet sind.

2. Spulen-Einsetzvorrichtung nach Anspruch 1, dadurch gekennzeichnet, daß die Antriebsabschnitte (15, 16; 29) für die Hin- und Herbewegung drei unabhängige Hydraulikzylinder (17, 18; 29) als Antrieb enthalten.

3. Spulen-Einsetzvorrichtung nach Anspruch 2, dadurch gekennzeichnet, daß die drei Hydraulikzylinder (17, 18; 29) als Antrieb des Spulentreibers (9) und der beiden Lamellenhalter (12, 13) angeordnet sind, deren Umkehrstellungen mittels Kontaktabschnitten (26, 27; 31) auf Stangen (19, 20; 30) der Hydraulikzylinder (17, 18; 29) und mittels entsprechender Begrenzungsschalter (21a, 21b, 21c; 22a, 22b, 22c; 32, 33, 34) gesteuert werden, die bei Kontakt mit den Kontaktabschnitten (26, 27; 31) wahlweise an- und abgeschaltet werden und deren Befestigungsorte in Bezug auf die Kontaktabschnitte (26, 27; 31) veränderbar sind.

4. Spulen-Einsetzvorrichtung nach Anspruch 1, dadurch gekennzeichnet, daß die Antriebsabschnitte drei konzentrisch angeordnete Schäfte (130, 130A, 130B) aufweisen, die den Spulentreiber (109) und die beiden Lamellenhalter (112, 113) unabhängig voneinander antreiben, und der ferner drei Motoren (121, 125, 127) aufweist, die die drei Schäfte (130, 130A, 130B) jeweils unabhängig voneinander mittels mit Gewinde versehener Schäfte (115, 116, 117) und entsprechender Muttern (112, 113, 114) vertikal hin- und herbewegen.

**Revendications**

1. Un appareil (F; FB) d'insertion de bobinage comprenant une multiplicité d'organes du type couteaux (5) disposés en une configuration annulaire avec des espacements prédéterminés pour le guidage d'un bobinage (8) dans des encoches (7) d'un noyau (6) d'un stator de machine électrique tournante, et un poussoir de bobinage (9; 109) adapté à un mouvement de va et vient vertical en direction axiale par rapport auxdits organes du type couteaux (5; 105) pour insérer le bobinage (8) dans lesdites encoches (7) sous pression en utilisant lesdits couteaux (5; 105) comme guides, la multiplicité desdits organes du type couteau (5; 105) étant constituée d'une multiplicité de groupes de couteaux (10, 11; 105, 105b) qui sont respectivement portés par des porte-couteaux séparés (12, 13, 112, 113), caractérisé en ce que lesdits organes du type couteaux sont mobiles en direction axiale indépendamment les uns des autres, ladite multiplicité desdits porte-couteaux (12, 13; 112, 113) et ledit poussoir de bobinage (9; 109) étant respectivement munis d'éléments d'actionnement en va et vient (15, 16; 29) qui sont indépendants l'un de l'autre, l'extrémité desdits organes du type couteaux (5, 105) étant située à la fin du mouvement d'insertion dans une position en dessous de l'extrémité supérieure du poussoir de bobinage (9; 109).

2. Un appareil d'insertion de bobinage comme revendiqué dans la revendication 1, caractérisé en ce que lesdits éléments d'actionnement en va et vient (15, 16; 29) comportent trois cylindres hydrauliques indépendants (17, 18; 29) pour l'actionnement.

3. Un appareil d'insertion de bobinage comme revendiqué dans la revendication 2, caractérisé en ce que lesdits trois cylindres hydrauliques (17, 28; 29) sont disposés pour actionner ledit poussoir de bobinage (9) et deux porte-couteaux (12, 13) et sont commandés en des positions opposées par des parties de contact (26, 27; 31) prévues sur des tiges (19, 20; 30) desdits cylindres hydrauliques (17, 18; 29) et des contacteurs de limitation correspondants (21a, 21b, 21c; 22a, 22b, 22c; 32, 33, 34) destinés à être sélectivement commutés en service et hors service lors du contact avec lesdites parties de contact (26, 27; 31), lesdits contacteurs de limitation (21a, 21b, 21c; 22a, 22b, 22c; 32, 33, 34) étant disposés de manière à occuper une position de fixation variable par rapport aux- dites parties de contact (26, 27; 31).

4. Un appareil d'insertion de bobinage comme revendiqué dans la revendication 1, caractérisé en ce que lesdits éléments d'actionnement en va et vient comportent trois tiges (130, 130A, 130B) disposées concentriquement et susceptibles de pousser indépendamment ledit poussoir de bobinage (109) et deux porte-couteaux (112, 113), et trois moteurs (121, 125, 127) qui assujetissent respectivement lesdites trois tiges (130, 130A, 130B) au va et vient vertical indépendamment l'une de l'autre au moyen d'arbres filetés (115, 116, 117) et d'écrous correspondants (112, 113, 114).

**0 052 852**

Fig. 1    PRIOR ART

Fig. 2
    PRIOR ART

Fig. 3
    PRIOR ART

1

Fig. 4

*Fig. 5*

Fig. 6

**Fig. 7**

*Fig. 8*

*Fig. 9*

Fig. 10

| | | First method | Second method | |
|---|---|---|---|---|
| Cont. portion 26<br><br>1st blade group | SW<br>21a<br>21b<br><br>21c | | | 21a<br><br>21b<br>21c |
| Cont. portion 27<br><br>2nd blade group | 22a<br><br>22b<br><br>22c | | | 22a<br><br>22b<br>22c |
| Cont. portion 31<br><br>Coil pusher | 32<br><br>33<br><br>34 | | | 32<br>33<br><br>34 |

0 052 852

*Fig. II*

Fig. 12

Fig. 13